# EUROPÄISCHE PATENTSCHRIFT

(11) **EP 2 979 015 B1**
(45) Veröffentlichungstag und Bekanntmachung des Hinweises auf die Patenterteilung: **28.11.2018**
(21) Anmeldenummer: 13712790.8
(22) Anmeldetag: 27.03.2013
(51) Int. Cl.: F16K 31/528, F16K 3/26, F16K 11/02, G05D 23/13

(54) **VENTILVORRICHTUNG UND DAMPFREINIGUNGSGERÄT**
VALVE DEVICE AND STEAM-CLEANING DEVICE
DISPOSITIF À SOUPAPES ET APPAREIL DE NETTOYAGE À LA VAPEUR

(43) Veröffentlichungstag der Anmeldung: 03.02.2016
(73) Patentinhaber: Alfred Kärcher SE & Co. KG, 71364 Winnenden (DE)
(72) Erfinder: ENGELE, Jochen, 73635 Rudersberg (DE); SCHEUFFELE, Michael, 71570 Oppenweiler (DE)
(74) Vertreter: Hoeger, Stellrecht & Partner Patentanwälte mbB
(86) Internationale Anmeldenummer: PCT/EP2013/056588
(87) Internationale Veröffentlichungsnummer: WO 2014/154267

(56) Entgegenhaltungen:
- WO-A1-2011/009297
- CH-A- 195 593
- DE-B4- 10 258 832
- GB-A- 2 051 314
- US-A- 4 015 631
- US-A- 5 313 984
- US-A1- 2009 057 592
- US-A1- 2011 253 233

## Beschreibung

Die Erfindung betrifft eine Ventilvorrichtung.

Die Erfindung betrifft ferner ein Dampfreinigungsgerät.

Aus der DE 102 58 832 B4 ist ein Ventil mit einem ersten Einlass für dampfförmiges Medium und einem zweiten Einlass für flüssiges Medium, die mit einem Auslass zur Abgabe von flüssigem und dampfförmigem Medium in Strömungsverbindung stehen, wobei zwischen den Einlässen und dem Auslass ein Stellelement bewegbar gehalten ist und mittels des Stellelements die Abgabe von wahlweise dampfförmigem Medium oder eines Gemisches von dampfförmigem und flüssigem Medium einstellbar ist, bekannt. Ausgehend von einer Schließstellung des Stellelements, in der weder dampfförmiges Medium noch ein Gemisch von dampfförmigem und flüssigem Medium abgebbar sind, ist durch Bewegen des Stellelements in einer ersten Bewegungsrichtung nur dampfförmiges Medium mit zunehmender Durchflussmenge abgebbar, und ausgehend von der Schließstellung des Stellelements ist durch Bewegen des Stellelements in einer zweiten Bewegungsrichtung das Gemisch von dampfförmigem und flüssigem Medium abgebbar mit zunehmendem Anteil an flüssigem Medium.

Aus der DE 195 05 608 C2 ist ein Dampfreinigungsgerät mit einem zur Verdampfung beheizten Wasservorratsbehälter, einer aus dem Dampfraum des Wasservorratsbehälters austretenden Dampfleitung, die zu einem Dampfabgabeorgan führt und in der ein Schließ- oder Dosierventil angeordnet ist, und mit einer in die Dampfleitung eintretenden Zufuhr für flüssiges Wasser bekannt. Die Zufuhr wird durch eine in den Wasserraum des Wasservorratsbehälters eintauchende Steigleitung gebildet. In die Zufuhr ist ein Dosier- oder Schließventil eingefügt und die Zufuhr mündet stromaufwärts des Schließ- oder Dosierventils in der Dampfleitung in diese.

Aus der DE 44 06 222 C2 ist eine Wasser-Wasserdampf-Mischvorrichtung bekannt.

Aus der GB 2 051 314 A ist ein Wassermischventil bekannt, welches eine einzige Kontrollspindel aufweist, die einen Sitzverschluss trägt. Durch Rotation der Spindel öffnet sich der Verschluss, und kaltes Wasser kann von einem Einlass zu einem Auslass über Kanäle in dem Kolben und zu einem Heizer über einen weiteren Auslass strömen.

Der Erfindung liegt die Aufgabe zugrunde, eine Ventilvorrichtung der eingangs genannten Art bereitzustellen, welche auf einfache Weise herstellbar ist und vorteilhafte Einsatzeigenschaften aufweist.

Diese Aufgabe wird bei der eingangs genannten Ventilvorrichtung erfindungsgemäß dadurch gelöst, dass ein Ventilkörper vorgesehen ist, mindestens ein erster Eingang für ein flüssiges Medium und ein zweiter Eingang für ein dampfförmiges Medium, welche an dem Ventilkörper angeordnet sind, vorgesehen ist, mindestens ein Ausgang, welcher an dem Ventilkörper angeordnet ist, vorgesehen ist, und ein Stellelement, welches eine Spindel ist, die drehbar an dem Ventilkörper gelagert ist, und in einem Aufnahmeraum höhenverschieblich gelagert ist, vorgesehen ist, wobei der Ventilkörper zur Bildung des ersten Eingangs eine Öffnung und zur Bildung des zweiten Eingangs eine Öffnung aufweist, mindestens ein Kanal in die Öffnung zur Bildung des ersten Eingangs mündet und das Stellelement einen Stift aufweist, wobei eine Höhenposition des Stifts bestimmt, ob der erste Eingang gesperrt oder offen ist, und eine Stellung des Stellelements bestimmt, welche Menge an dem oder den fluiden Medien, welche an dem ersten Eingang oder zweiten Eingang einkoppelbar sind, an dem mindestens einen Ausgang auskoppelbar sind, wobei das Stellelement einen ersten Bereich aufweist, welcher in fluidwirksamer Verbindung mit dem ersten Eingang und dem zweiten Eingang steht, und einen zweiten Bereich aufweist, welcher fluidwirksam mit dem mindestens einen Ausgang verbindbar oder verbunden ist, wobei zwischen dem ersten Bereich und dem zweiten Bereich der mindestens eine Kanal in dem Stellelement angeordnet ist, so dass fluides Medium von dem ersten Bereich in den zweiten Bereich durch das Stellelement hindurchströmen kann, und wobei der Ventilkörper eine Öffnung aufweist, welche in direkter fluidwirksamer Verbindung mit dem mindestens einen Ausgang steht und wobei das Stellelement in dem zweiten Bereich so ausgebildet ist, dass ein Bedeckungsgrad dieser Öffnung durch das Stellelement abhängig von der Stellung des Stellelements ist und/oder eine Stellung des Stellelements bestimmt, welche Menge an fluidem Medium in die Öffnung einkoppelbar ist.

Bei dieser Ausführungsform lässt sich insbesondere der Ventilkörper auf einfache Weise ausbilden. Er lässt sich insbesondere einstückig aus einem Kunststoffmaterial herstellen. Fluides (insbesondere flüssiges oder gasförmiges) Medium wird durch das Stellelement hindurch durchgeführt. Dadurch lässt sich beispielsweise eine große Lagerfläche für das Stellelement an dem Ventilkörper bereitstellen. Es lässt sich auf einfache Weise beispielsweise ein entsprechendes Gleitlager wie Drehlager oder Dreh-Schiebe-Lager realisieren. Auch das Stellelement lässt sich auf vorteilhafte Weise insbesondere einstückig aus einem Kunststoffmaterial herstellen.

Ein entsprechendes Ventil der Ventilvorrichtung mit Ventilköper und Stellelement lässt sich mit geringem Gewicht ausbilden. Eine Wartung und ein Austausch lassen sich auf einfache Weise durchführen.

Die Ventilvorrichtung kann dabei ein Ventil umfassen, welches als Dosierventil, als Mischventil oder als Dosier-Misch-Ventil ausgebildet ist. Auch eine Ausbildung als Sperrventil (in einer bestimmten Stellung des Stellelements) lässt sich auf einfache Weise realisieren.

Das Stellelement ist eine Spindel, welche drehbar an dem Ventilkörper gelagert ist. Dadurch lässt sich durch eine Drehstellung des Stellelements festlegen, in welcher Menge das oder die Fluide an dem Ausgang anstehen. Beispielsweise lässt sich dosieren, welche Menge an dampfförmigem Medium an dem Ausgang ansteht beziehungsweise es lässt sich eine Mischung von dampfförmigem Medium und flüssigem Medium einstellen.

Bei einer konstruktiv günstigen Ausführungsform weist die Spindel eine zylindrische Außenkontur auf und der Ventilkörper weist einen dazu angepassten hohlzylindrischen Aufnahmeraum. Die zylindrische Außenkontur bezieht sich dabei auf eine Einhüllende des Stellelements. Dadurch lässt sich auf einfache Weise ein Drehlager oder Dreh-Schiebe-Lager insbesondere als Gleitlager ausbilden.

Weitere Einsatzmöglichkeiten ergeben sich, dadurch, dass das Stellelement in dem Aufnahmeraum höhenverschieblich gelagert ist. Es lässt sich beispielsweise dadurch einstellen, ob in dem Aufnahmeraum ein Mischungsraum beispielsweise für flüssiges Medium und dampfförmiges Medium bereitgestellt ist. Dadurch lässt sich das entsprechende Ventil der Ventilvorrichtung sowohl als Dosierventil als auch als Mischventil ausbilden.

Es ist dann günstig, wenn für das Stellelement eine Kulissenbahnführung vorgesehen ist, wobei insbesondere eine Kulissenbahn einen Bahnanteil mit bezogen auf eine Drehachse des Stellelements gleicher axialer Höhe und einen Bahnanteil mit axialer Höhenänderung aufweist. Beispielsweise kann über den Bahnanteil mit gleicher axialer Höhe eine Dosierung erreicht werden und über die axiale Höhenänderung eine Mischung. Beispielsweise sind das Stellelement und der Ventilkörper so ausgebildet, dass, wenn der Bahnanteil mit gleicher axialer Höhe relevant ist, eine Einkopplung von beispielsweise flüssigem Medium in den Aufnahmeraum gesperrt ist und, wenn der Bahnanteil durch entsprechende Drehung mit axialer Höhenänderung relevant wird, eine entsprechende Sperrung beispielsweise für flüssiges Medium aufgehoben wird.

Beispielsweise ist an dem Ventilkörper ein Stiftelement der Kulissenbahnführung gehalten, wobei die Kulissenbahn an dem Stellelement gebildet ist. Dadurch lässt sich auf einfache Weise eine axiale Fixierung des Stellelements an dem Ventilkörper erreichen mit einer entsprechenden Drehbarkeit des Stellelements. Das entsprechende Stiftelement ist beispielsweise ein Metallstift, welcher an einer Wandung des Ventilkörpers gehalten ist oder an einem an der Wandung des Ventilkörpers angeordneten Aufnahmeelement gehalten ist.

Insbesondere ist das Stellelement drehfest mit einem Wahlschalter verbunden und durch diesen in seiner Stellung festlegbar und in einer Stellungsänderung betätigbar. Über den Wahlschalter kann dann direkt eine entsprechende Drehstellung des Stellelements eingestellt und festgelegt werden. Es lässt sich eine direkte mechanische Verbindung erreichen, so dass ein einfacher mechanischer Aufbau erreicht wird.

Insbesondere ist eine Drehbarkeit des Stellelements von mindestens näherungsweise 180° realisiert. Durch die Anordnung des mindestens einen Kanals in dem Stellelement lässt sich ein entsprechend großer Drehbereich realisieren.

Günstig ist es, wenn das Stellelement aus einem Kunststoffmaterial hergestellt und insbesondere einstückig ist. Es lässt sich dadurch eine Optimierung der Strömungsführung erreichen, wobei das Ventil der Ventileinrichtung mit geringem Gewicht herstellbar ist und dabei kostengünstig herstellbar ist. Es lässt sich eine optimierte Lagerung des Stellelements und insbesondere Drehlagerung erreichen. Ferner lässt sich eine einfache Bedienbarkeit erreichen und es lässt sich ein großer Drehbereich realisieren. Elemente des Ventils lassen sich in ihrer geometrischen Ausbildung genau definieren.

Aus dem gleichen Grund ist es günstig, wenn der Ventilkörper aus einen Kunststoffmaterial hergestellt ist und insbesondere einstückig ist.

Der Ventilkörper weist zur Bildung des mindestens einen Eingangs eine Öffnung auf und der mindestens eine Kanal mündet in die Öffnung. Dadurch ist die Einkopplung von entsprechendem fluidem Medium in den Ventilkörper unabhängig von der Drehstellung des Stellelements realisierbar.

Das Stellelement weist einen Stift auf, wobei eine Höhenposition des Stifts bestimmt, ob ein Eingang gesperrt oder offen ist. Dadurch lässt sich auf einfache Weise ein Sperrventil ausbilden, bei welchem über Einstellung der axialen Höhe des Stellelements einstellbar ist, ob ein bestimmter Eingang (insbesondere für ein flüssiges Medium) gesperrt ist oder offen ist. Dadurch lässt sich auf einfache Weise einstellen, ob flüssiges Medium zu dampfförmigem Medium zugemischt wird. Insbesondere lässt sich dadurch auf einfache Weise eine Zumischung von flüssigem Medium zu dampfförmigem Medium einstellen, wenn eine Dosierung von dampfförmigem Medium eine bestimmte (obere) Schwelle überschreitet.

Günstig ist es, wenn das Stellelement an dem ersten Bereich einen Kopf aufweist, in welchen der mindestens eine Kanal mündet. An dem Kopf lässt sich ein Stift positionieren, um ein Sperr-Dosierventil zu bilden.

Es ist ein erster Eingang für ein flüssiges Medium und ein zweiter Eingang für ein dampfförmiges Medium an dem Ventilkörper
vorgesehen. Es lässt sich dadurch insbesondere eine Zumischung von flüssigem Medium zu dampfförmigem Medium erreichen.

Bei einem Ausführungsbeispiel ist an dem Ventilkörper ein Ringbereich angeordnet, an welchem der zweite Eingang positioniert ist, wobei insbesondere der Ringbereich den ersten Eingang umgibt. Es lässt sich dadurch auf einfache Weise eine Zumischung von flüssigem Medium zu dampfförmigem Medium realisieren. Beispielsweise wird der erste Eingang über eine entsprechende Stellung des Stellelements für bestimmte Stellungen des Stellelements gesperrt, so dass eine Zumischung verhindert ist. In diesen Stellungen des Stellelements ist dann ein Dosierventil realisiert. Bei anderen Stellungen des Stellelements ist der erste Eingang freigegeben und es lässt sich beispielsweise eine Zumischung von flüssigem Medium zu dampfförmigem Medium realisieren.

Ganz besonders vorteilhaft ist es, wenn in einem Aufnahmeraum des Ventilkörpers für das Stellelement ein Mischungsraum für dampfförmiges Medium und flüssiges Medium gebildet ist oder bildbar ist. Dadurch lässt sich ein Dampf-Flüssigkeits-Gemisch bereitstellen.

Der Ventilkörper weist eine Öffnung auf, welche in direkter fluidwirksamer Verbindung mit dem mindestens einen Ausgang steht und das Stellelement in dem zweiten Bereich so ausgebildet ist, dass ein Bedeckungsgrad dieser Öffnung durch das Stellelement abhängig von der Stellung des Stellelements ist und/oder eine Drehstellung des Stellelements bestimmt, welche Menge an fluidem Medium in die Öffnung einkoppelbar ist. Dadurch lässt sich auf einfache Weise ein Dosierventil ausbilden.

Insbesondere ist in dem Stellelement eine Mehrzahl von Kanälen gebildet, welche in einer Umfangsrichtung beabstandet sind, wobei die Kanäle insbesondere gleichmäßig beabstandet sind. Es lässt sich dadurch ein gewünschter hydrodynamischer Querschnitt einstellen, um eine entsprechende Fluidmenge durchführen zu können. Durch eine Beabstandung und insbesondere gleichmäßige Beabstandung lassen sich die Kanäle auf einfache Weise beispielsweise über Bohrungen herstellen.

Bei einem Ausführungsbeispiel, welches insbesondere im Zusammenhang mit einem Dampfreinigungsgerät vorteilhaft ist, ist eine Summe der hydrodynamischen Querschnitte des oder der Kanäle im Bereich zwischen 2 mm und 3 mm und insbesondere im Bereich zwischen 2,2 mm und 2,8 mm und insbesondere im Bereich zwischen 2,4 mm und 2,6 mm. Es hat sich gezeigt, dass sich dann ein optimaler Durchsatz ergibt.

Günstig ist es, wenn eine Kolbeneinheit vorgesehen ist, welche einen beweglichen Kolben aufweist, welcher dem mindestens einen Ausgang zugeordnet ist. Durch die Kolbeneinheit kann beispielsweise an einer Anwendung gesteuert werden, wann fluides Medium (beispielsweise als dampfförmiges Medium oder als Mischung von flüssigem Medium und dampfförmigem Medium) an der Anwendung genutzt wird. Beispielsweise wird durch einen Schalter an einer Spritzpistole dann betätigt, ob entsprechendes fluides Medium gesprüht wird oder nicht.

Es ist dann günstig, wenn der mindestens eine Ausgang des Ventilkörpers in einen Raum mündet, welcher einen ersten Bereich und einen zweiten Bereich aufweist, wobei der erste Bereich mindestens einen Ausgang der Kolbeneinheit aufweist, der Kolben in dem zweiten Bereich angeordnet ist und der erste Bereich und der zweite Bereich von einer Membran getrennt sind. Es lässt sich dadurch verhindern, dass der Kolben im Medium geführt wird. Der Kolben wird dann insbesondere nicht mit dampfförmigem Medium hinterspült. Es kann sich dann auch entsprechend kein Kalk in engen Spalten absetzen.

Insbesondere ist in einer ersten Stellung der Membran ein Fluidweg zwischen dem mindestens einen Ausgang des Ventilkörpers und dem mindestens einen Ausgang der Kolbeneinheit gesperrt und in einer zweiten Stellung der Membran ist dieser Fluidweg freigegeben. Dadurch lässt sich durch die Membranstellung einstellen, ob die Ventileinrichtung als Ganzes über die Kolbeneinheit fluides Medium abgibt oder nicht.

Insbesondere wirkt der Kolben auf die Membran und/oder ist mit dieser verbunden und die Membran ist über die Stellung des Kolbens in die erste Stellung oder zweite Stellung bringbar. Es ist dann gesteuert über den Kolben einstellbar, ob fluides Medium (welches von dem Ventil der Ventilvorrichtung bereitgestellt ist) über die Kolbeneinheit der Ventilvorrichtung einer Anwendung bereitgestellt wird oder nicht. Die Kolbeneinheit bildet dabei insbesondere ein Sperrventil, durch welches steuerbar ist, ob fluides Medium, welches entsprechend durch das Ventil der Ventilvorrichtung dosiert wurde beziehungsweise gemischt wurde, bereitgestellt wird oder nicht und insbesondere gesprüht wird oder nicht.

Insbesondere ist die Kolbeneinheit steuerbar und insbesondere ist eine Kolbenstellung magnetisch steuerbar. Beispielsweise ist die Kolbeneinheit als Magnetventil ausgebildet.

Die erfindungsgemäße Ventilvorrichtung ist ausgebildet als Dosierventil und/oder Mischventil. Sie kann dabei auch eine Sperrventilfunktion aufweisen.

Erfindungsgemäß wird ein Dampfreinigungsgerät bereitgestellt, welches eine erfindungsgemäße Ventilvorrichtung umfasst.

Die nachfolgende Beschreibung bevorzugter Ausführungsformen dient im Zusammenhang mit den Zeichnungen der näheren Erläuterung der Erfindung. Es zeigen:
- Figur 1: eine schematische Schnittansicht eines Ausführungsbeispiels einer erfindungsgemäßen Ventilvorrichtung mit einem gesperrten ersten Eingang;
- Figur 2: eine perspektivische Teilschnittansicht der Ventilvorrichtung gemäß Figur 1;
- Figur 3: eine ähnliche Ansicht wie Figur 2 mit offenem ersten Eingang;
- Figur 4: eine Draufsicht in der Richtung Y auf ein Stellelement der Ventilvorrichtung gemäß Figur 1;
- Figur 5: eine Schnittansicht längs der Linie 5-5 gemäß Figur 4;
- Figur 6: eine Ansicht in der Richtung Y auf einen Ventilkörper der Ventilvorrichtung gemäß Figur 1 (ohne Gegenelement für das Stellelement);
- Figur 7: eine Darstellung eines Ausführungsbeispiels eines Wahlschalters zur Betätigung und Festlegung des Stellelements gemäß den Figuren 4 und 5; und
- Figur 8: eine schematische Darstellung eines Ausführungsbeispiels eines Dampfreinigungsgeräts, in welches die Ventilvorrichtung gemäß Figur 1 integriert ist.

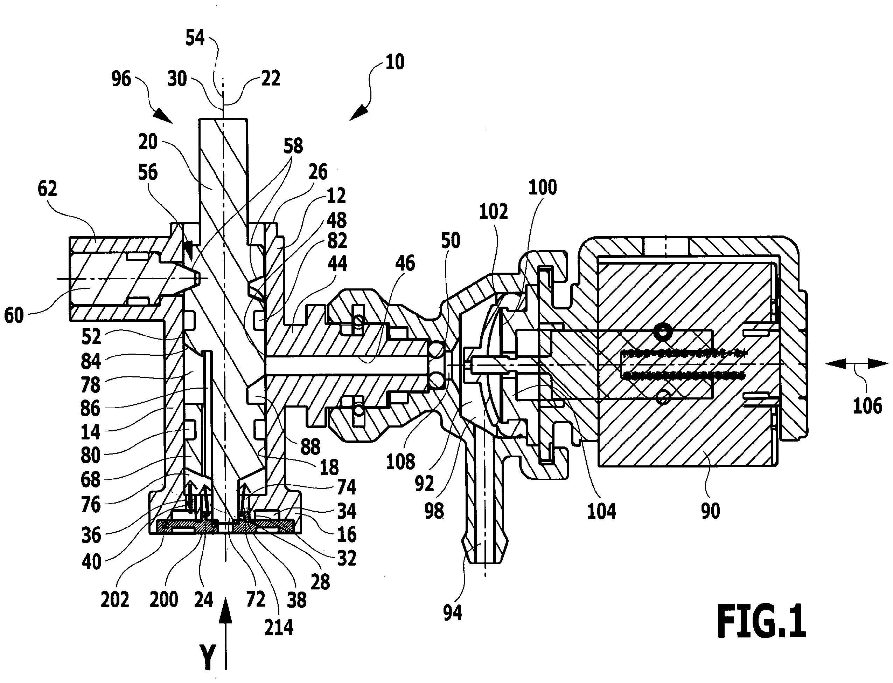

Ein Ausführungsbeispiel einer erfindungsgemäßen Ventilvorrichtung, welches in Figur 1 gezeigt und dort mit 10 bezeichnet ist, umfasst einen Ventilkörper 12. Der Ventilkörper 12 ist aus einem Kunststoffmaterial wie PSSU hergestellt. Er ist insbesondere einstückig ausgebildet.

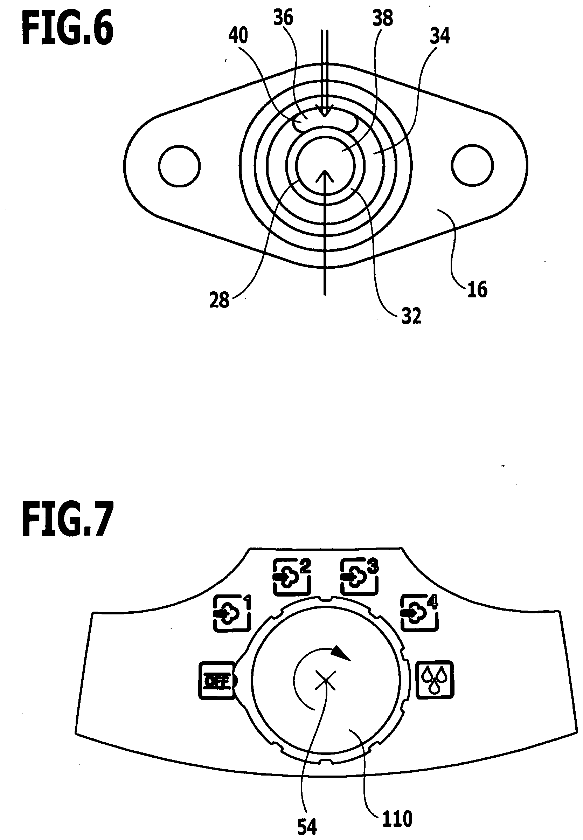

Der Ventilkörper weist bei einem Ausführungsbeispiel ein Zylinderelement 14 auf. An diesem Zylinderelement 14 ist bei einer Ausführungsform insbesondere einstückig ein Flansch 16 angeordnet (Figuren 1 und 6), über welchen der Ventilkörper 12 an einer Anwendung fixierbar ist.

An dem Zylinderelement 14 ist ein Aufnahmeraum 18 für ein Stellelement 20 gebildet. Der Aufnahmeraum 18 ist insbesondere hohlzylindrisch. Das Zylinderelement 14 hat dann einen Ringzylinderbereich.

Das Zylinderelement 14 weist bezogen auf eine axiale Richtung 22 ein erstes Ende 24 und ein gegenüberliegendes zweites Ende 26 auf. Bei einem Ausführungsbeispiel ist der Aufnahmeraum 18 an dem zweiten Ende 26 offen, das heißt eine Querschnittsfläche des Aufnahmeraums 18 an dem zweiten Ende 26 entspricht einer Querschnittsfläche des hohlzylindrischen Bereichs des Aufnahmeraums 18.

An dem ersten Ende 24 weist das Zylinderelement 14 eine Öffnung 28 (Figur 6) auf. Diese Öffnung 28 liegt koaxial zu einer Rotationssymmetrieachse 30, welche die gleiche Richtung wie die axiale Achse 22 hat, des Aufnahmeraums 18. Die Öffnung 28 hat dabei einen kleineren Durchmesser als die entsprechende Öffnung an dem zweiten Ende 26.

An der Öffnung 28 ist ein Ringstutzen 32 nach außen, das heißt von dem Aufnahmeraum 18 weg, angeordnet. Dieser Ringstutzen 32 ist von einem Ringraum 34 umgeben. Der Ringraum 34 liegt dabei an einer Außenseite, das heißt einer dem Aufnahmeraum 18 abgewandten Seite, des Flansches 16. An dem Ringraum 34 ist eine Öffnung 36 angeordnet (Figur 6), welche in den Aufnahmeraum 18 mündet. Sowohl über die Öffnung 28, welche insbesondere einen kreisrunden Querschnitt aufweist, als auch über die Öffnung 36 lässt sich, wie untenstehend noch näher erläutert wird, fluides Medium in den Aufnahmeraum 18 einkoppeln.

Die Öffnung 28 bildet einen ersten Eingang 38 für flüssiges Medium als fluides Medium zur Einkopplung in den Aufnahmeraum 18. Die Öffnung 36 bildet einen zweiten Eingang 40, welcher zur Einkopplung von dampfförmigem Medium als fluides Medium in den Aufnahmeraum 18 dient.

Die Öffnung 36 ist in ihrer Gestalt angepasst an den Ringraum 34, in welchem sie angeordnet ist. Sie liegt nicht koaxial zur Rotationssymmetrieachse 30. Sie ist beispielsweise sichelförmig ausgestaltet.

An dem Ventilkörper 12 sitzt beabstandet zu dem ersten Ende 24 und dem zweiten Ende 26 ein Rohrelement 44. Das Rohrelement 44 sitzt insbesondere mindestens näherungsweise mittig zwischen dem ersten Ende 24 und dem zweiten Ende 26. Dieses Rohrelement ist quer und insbesondere senkrecht zu der Rotationssymmetrieachse 30 orientiert. Das Rohrelement 44 weist einen Innenraum 46 auf, welcher von fluidem Medium durchströmbar ist. Dieser Innenraum 46 mündet über eine Öffnung 48 in den Aufnahmeraum 18. Das Rohrelement 44 ist dabei so angeordnet, dass eine Hauptströmungsrichtung von fluidem Medium in dem Innenraum 46 quer und insbesondere senkrecht zu der axialen Richtung 22 orientiert ist.

Das Rohrelement 44 definiert einen Ausgang 50 für den Ventilkörper 12, an welchem fluides Medium beziehungsweise fluide Medien (wie beispielsweise ein Gemisch von dampfförmigem Medium und flüssigem Medium) auskoppelbar ist.

Das Stellelement 20 ist als Spindel ausgebildet. Es weist eine zylindrische Außenkontur 52 auf, welche angepasst ist an die hohlzylindrische Kontur des Aufnahmeraums 18. Es ist dadurch ein Drehlager für eine Drehlagerung des Stellelements 20 in dem Zylinderelement 14 gebildet. Eine Drehachse 54 fällt dabei zusammen mit der Rotationssymmetrieachse 30.

Das Stellelement 20 ist über eine Kulissenbahnführung 56 an dem Ventilkörper 12 gehalten. Die Kulissenbahnführung 56 weist eine Kulissenbahn 58 auf. Diese Kulissenbahn 58 ist durch eine nutförmige Ausnehmung an dem Stellelement 20 gebildet. Die Kulissenbahnführung 56 weist ferner ein Stiftelement 60 (Kulissenstein) auf, welches an dem Ventilkörper 12 angeordnet ist. Das Stiftelement 60 ist beispielsweise ein Metallelement, welches in einem entsprechenden Aufnahmeelement 62 des Ventilkörpers 12 angeordnet ist. Beispielsweise ist das Stiftelement 60 in das Aufnahmeelement 62 eingepresst.

Bei dem in Figur 1 gezeigten Ausführungsbeispiel ist als Aufnahmeelement 62 ein Stutzen vorgesehen, welcher insbesondere einstückig an dem Ventilkörper 12 sitzt. In dem Stutzen ist das Stiftelement 60 gehalten und beispielsweise eingepresst.

Die Ausbildung der Kulissenbahn 58 definiert die Bewegungsmöglichkeiten des Stellelements 20 in dem Aufnahmeraum 18. Bei einer Ausführungsform erstreckt sich die Kulissenbahn 58 in einem Bereich um 180° bezogen auf die Drehachse 54. Dadurch ist eine Drehbarkeit des Stellelements 20 in dem Aufnahmeraum 18 ausgehend von einer Grundstellung bei 0° um bis zu 180° möglich.

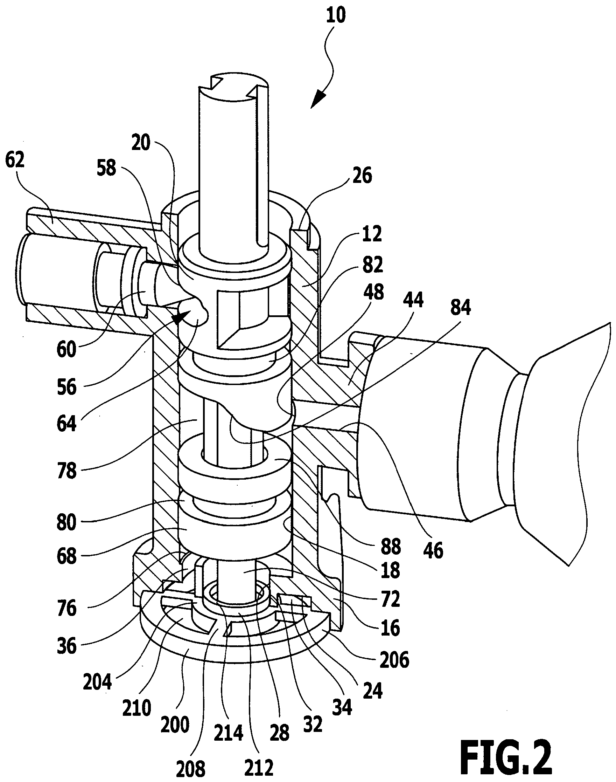

Bei einem Ausführungsbeispiel weist die Kulissenbahn 58, wie in den Figuren 2, 4 und 5 angedeutet, einen ersten Bahnanteil 64 und einen zweiten Bahnanteil 66 auf, wobei der erste Bahnanteil 64 in den zweiten Bahnanteil 66 übergeht. Der erste Bahnanteil 64 ist so ausgebildet, dass dort die Kulissenbahn in gleicher axialer Höhe liegt. Der zweite Bahnanteil 66 ist so ausgebildet, dass bezüglich dem ersten Bahnanteil 64 eine Änderung in der axialen Höhe auftritt. Wenn das Stiftelement 60 in den ersten Bahnanteil 64 der Kulissenbahn 58 eingetaucht ist, dann liegt eine Zwangsbedingung für die Beweglichkeit des Stellelements 20 in dem Aufnahmeraum 18 vor, gemäß der das Stellelement 20 nur um die Drehachse 54 gedreht werden kann. Wenn nach Durchlaufen des ersten Bahnanteils 64 das Stiftelement 60 in den zweiten Bahnanteil 66 eintaucht, dann erfolgt eine Änderung der axialen Höhe. Der zweite Bahnanteil 66 ist dabei insbesondere so ausgebildet, dass eine Hebung des Stellelements 20 von dem ersten Ende 24 weg erfolgt, wobei weiterhin, bis der entsprechende Anschlag am Ende der Kulissenbahn 58 erreicht ist, eine Drehung ermöglicht ist.

Die Kulissenbahn 58 weist dabei am ersten Bahnanteil 64 und am zweiten Bahnanteil 66 die gleiche Breite auf, die durch das Stiftelement 60 bestimmt ist.

Durch den Übergang von dem ersten Bahnanteil 64 zu dem zweiten Bahnanteil 66 lässt sich bei Drehung des Stellelements 20 in dem Aufnahmeraum 18 dieses von dem ersten Ende 24 her abheben.

Das Stellelement 20 hat einen Kopf 68. Wenn durch eine Drehung in Richtung des Endes der Kulissenbahn 58 das Stiftelement 60 in den zweiten Bahnanteil 66 gelangt, dann kann durch den zweiten Eingang 40 eingekoppeltes flüssiges Medium in den Aufnahmeraum 18 gelangen.

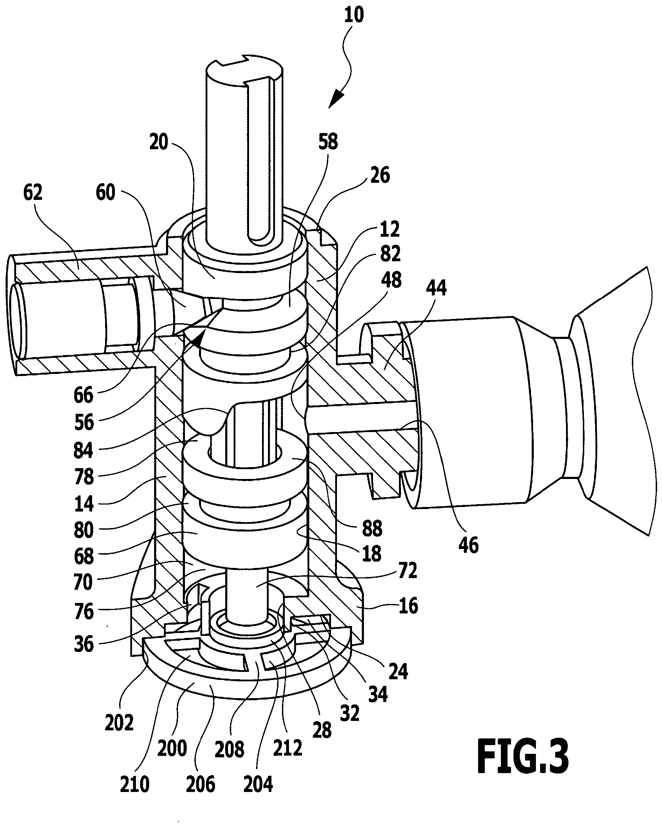

In diesem Falle ist, wie in Figur 3 gezeigt, ein Mischungsraum 70 vor dem Kopf 68 in dem Aufnahmeraum 18 gebildet. Sowohl Fluid, welches durch den zweiten Eingang 40 eingekoppelt wird, kann in den Mischungsraum 70 strömen, als auch Fluid, welches über den ersten Eingang 38 eingekoppelt wird, kann in den Mischungsraum 70 strömen. Diese Fluide können sich dort mischen. Wenn über den ersten Eingang 38 dampfförmiges Medium eingekoppelt wird und über den zweiten Eingang 40 flüssiges Medium eingekoppelt wird, dann kann sich Flüssigkeit und Dampf in dem Mischungsraum 70 mischen.

An dem Kopf 68 sitzt ein Stift 72, welcher eine Dichtfunktion hat. Dieser Stift 72 ist koaxial zu der Drehachse 54 ausgerichtet und ist durch die Öffnung 28 durchgetaucht. Der Stift 72 weist dabei einen kleineren Durchmesser als die Öffnung 28 auf. Dadurch ist ein Ringbereich 74 um den Stift 72 gebildet. Dieser Ringbereich 74 ist unabhängig von der axialen Stellung des Stellelements 20 vorhanden.

Das Stellelement 20 hat einen ersten (Frei-)Bereich 76, welcher in (direkter) fluidwirksamer Verbindung mit dem ersten Eingang 38 steht. Der erste Bereich 76 ist an dem Kopf 68 gebildet.

Das Stellelement 20 hat ferner einen zweiten (Frei-)Bereich 78, welcher beabstandet zu dem ersten Bereich 76 ist, und über welchen eine (direkte) fluidwirksame Verbindung mit dem Ausgang 50 herstellbar ist. Insbesondere ist eine direkte fluidwirksame Verbindung zwischen dem zweiten Bereich 78 und der Öffnung 48 bei bestimmten Drehstellungen des Stellelements 20 herstellbar.

Zwischen dem ersten Bereich 76 und dem zweiten Bereich 78 hat das Stellelement 20 die erwähnte zylindrische Außenkontur und ist gleitend an einem entsprechenden Wandbereich des Aufnahmeraums 18 geführt.

Es kann dabei vorgesehen sein, dass das Stellelement 20 zwischen dem ersten Bereich 76 und dem zweiten Bereich 78 eine insbesondere ringförmige Nut 80 aufweist. In dieser Nut 80 kann eine Dichtung in Form eines O-Rings angeordnet sein, welcher für eine axiale Fluid-Abdichtung zwischen dem ersten Bereich 76 und dem zweiten Bereich 78 im Bereich der Außenkontur 52 sorgt.

Es kann auch vorgesehen sein, dass zwischen dem zweiten Bereich 78, welcher axial dem ersten Bereich 76 nachgeordnet ist, und der Kulissenbahn 58 eine Nut 82 ebenfalls zur Aufnahme einer Dichtung angeordnet ist, um an der Außenkontur 52 zu der Kulissenbahn 58 hin eine Fluiddichtigkeit zu erreichen.

Der zweite Bereich 78 weist einen Freibereich 84 auf, welcher gegenüber der Außenkontur 52 zurückgesetzt ist und so ausgestaltet ist, dass ausgehend von der Grundstellung (0°-Stellung) des Stellelements 20 eine Dosierbarkeit der Menge an fluidem Medium, welches in die Öffnung 48 gelangt, einstellbar ist. Der Freibereich 84 ist insbesondere so ausgestaltet, dass in der Grundstellung ein entsprechender Teil der Außenkontur 52 des Stellelements 20 die Öffnung 48 abdeckt und damit eine Sperrung des Fluideintritts in die Öffnung 48 erreicht ist (vergleiche Figur 2). Demgemäß steht an dem Ausgang 50 dann auch kein fluides Medium an.

Die Kontur des Stellelements 20 an dem Freibereich 84 ist dann so, dass ausgehend von dieser Grundstellung durch Drehung des Stellelements 20 die Menge an fluidem Medium, welche durch die Öffnung 48 einkoppelbar ist, variiert und insbesondere erhöht wird.

In dem Stellelement 20 sind Kanäle 86 angeordnet, welche sich zwischen dem ersten Bereich 76 und dem zweiten Bereich 78 erstrecken und dabei eingangsseitig in den Kopf 68 münden und ausgangsseitig in den Freibereich 84 münden. Die Kanäle 86 sind dabei mindestens näherungsweise parallel zu der Drehachse 54 orientiert. Die Kanäle 86 sind vollständig in das Stellelement 20 integriert, das heißt sie sind vollständig von Material des Stellelements 20 umgeben. Die Kanäle 86 sind insbesondere durch Bohrungen in Vollmaterial des Stellelements 20 gebildet.

Das Stellelement 20 ist bei einem Ausführungsbeispiel einstückig ausgebildet. Es ist insbesondere aus einem Kunststoffmaterial wie PSSU hergestellt.

Die Kanäle 86 münden dabei in den Mischungsraum 70, so dass eingangsseitig über den Mischungsraum 70 unabhängig von der axialen Stellung des Stellelements 20 durch dieses hindurch in den zweiten Bereich 78 über den ersten Eingang 38 eingekoppeltes dampfförmiges Medium führbar ist.

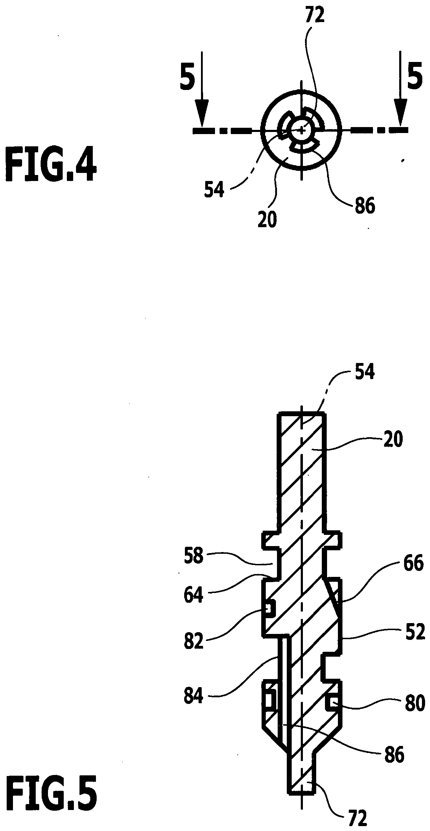

Es ist insbesondere eine Mehrzahl von Kanälen 86 vorgesehen (Figur 4). Diese sind in einer Umfangsrichtung (bezogen auf die axiale Richtung der Drehachse 54) beabstandet und insbesondere gleichmäßig beabstandet. Bei dem in Figur 3 gezeigten Ausführungsbeispiel sind drei Kanäle 86 vorhanden, welche in einem Winkel von 120° zueinander liegen.

Alle Kanäle 86 münden dabei in den zweiten Bereich 78. Beispielsweise ist an dem Freibereich 84 an dem zweiten Bereich 78 eine Ringfläche 88 gebildet, in welche die Kanäle 86 münden. Die Ringfläche 88 ist dabei insbesondere quer und vorzugsweise senkrecht zu der Drehachse 54 orientiert.

Insbesondere ist der gesamte hydrodynamische Querschnitt der Kanalstruktur der Kanäle 86 im Bereich zwischen 2 mm und 3 mm. Bei einem Ausführungsbeispiel liegt der gesamte hydrodynamische Querschnitt bei circa 2,5 mm. Wenn drei Kanäle 86 vorhanden sind, dann weist jeder Kanal einen einzelnen hydrodynamischen Querschnitt von circa 0,8 mm auf.

Bei einem Ausführungsbeispiel, bei welchem der geometrische Querschnitt längs der Kanäle 86 jeweils konstant ist, entspricht insbesondere der geometrische Querschnitt dem hydrodynamischen Querschnitt.

In dem Flansch 16 sitzt an dem ersten Ende 24 ein Gegenelement 200 (Figuren 1 bis 3) für den Stift 72. Dieses Gegenelement 200 sitzt in einer entsprechenden ringförmigen Ausnehmung 202. Das Gegenelement 200 umfasst einen Innenring 204 und einen Außenring 206. Der Außenring 206 sitzt in der Ausnehmung 202.

Der Innenring 204 weist einen kleineren Durchmesser auf als der Außenring 206. Der Innenring 204 und der Außenring 206 sind über Verbindungsstege (Speichen) 208 miteinander verbunden. Es ist eine Mehrzahl von radial ausgerichteten Verbindungsstegen 208 vorgesehen. Bei dem gezeigten Ausführungsbeispiel sind vier Verbindungsstege vorgesehen.

Zwischen benachbarten Verbindungsstegen 208 sind jeweils durchgehende Ausnehmungen 210 gebildet. Durch solche Ausnehmungen 210 hindurch kann Fluid hindurchströmen.

Der Ringstutzen 32 ist in seinen Höhenabmessungen an die Ausnehmung 202 derart angepasst, dass sich eine Oberseite des Innenrings 204 an dem Stutzen 32 abstützt.

An dem Innenring 204 ist selber ein zylindrischer Stutzen 212 angeordnet. Dieser Stutzen 212 liegt an einer Innenseite des Ringstutzens 32 an.

Durch die Ausnehmungen 210 kann Fluid durch das Gegenelement 200 hindurch in den Ringraum 34 einströmen.

An einer Oberseite des Innenrings 204 ist eine Anlagefläche 214 für ein entsprechendes Ende des Stifts 72 gebildet (vergleiche Figuren 1 und 2).

Wenn der Stift 72 an der Anlagefläche 214 anliegt, dann ist die Öffnung 28 und damit der erste Eingang 38 fluiddicht geschlossen. Es kann dazu an dem Stift 72 und/oder der Anlagefläche eine entsprechende Fluiddichtung angeordnet sein. Die entsprechende Sperrstellung ist in den Figuren 1 und 2 gezeigt.

Wenn der Stift 72 mit seinem entsprechenden Ende von der Anlagefläche 214 abgehoben ist (Figur 3), dann ist der entsprechende erste Eingang 38 geöffnet und Fluid kann durch die Ausnehmungen 210 hindurch durch die Öffnung 28 in den Mischungsraum 70 strömen.

Bei einem Ausführungsbeispiel sitzt an dem Ventilkörper 12 an dem Rohrelement 44 eine Kolbeneinheit 90. Die Kolbeneinheit 90 kann dabei fest oder lösbar mit dem Ventilkörper 12 verbunden sein. Die Kolbeneinheit 90 weist dabei einen geschlossenen Raum 92 auf, welcher in fluidwirksamer Verbindung mit dem Ausgang 50 steht. Diesem Raum 92 selber ist ein Ausgang 94 zugeordnet. An diesem Ausgang 94 ist fluides Medium bereitgestellt, welches von einem durch den Ventilkörper 12 in Kombination mit dem Stellelement 20 gebildeten Ventil 96 an dem Ausgang 50 bereitgestellt ist.

Der Raum 92 umfasst einen ersten Bereich 98 und einen zweiten Bereich 100. Der erste Bereich 98 steht in direkter fluidwirksamer Verbindung mit dem Ausgang 50, wobei diese fluidwirksame Verbindung, wie untenstehend noch näher erläutert ist, schaltbar ist. Der zweite Bereich 100 ist über eine Membran 102 fluiddicht von dem ersten Bereich 98 getrennt.

Der Ausgang 94 steht dabei in direkter fluidwirksamer Verbindung mit dem ersten Bereich 98.

Die Kolbeneinheit 90 weist einen Kolben 104 auf. Dieser Kolben 104 ist insbesondere linear verschieblich in einer Richtung 106, welche quer und insbesondere senkrecht zu der Drehachse 54 liegt. Eine Bewegung des Kolbens 104 ist insbesondere steuerbar. Beispielsweise ist der Kolben 104 magnetisch steuerbar. Der Kolben 104 ist im zweiten Bereich 100 angeordnet.

Der Kolben 104 wirkt auf die Membran 102.

Bei einem Ausführungsbeispiel wirkt der Kolben 104 als Stoßkolben, welcher nicht fest mit der Membran 102 verbunden ist.

Der Kolben 104 weist eine ausgezeichnete erste Stellung auf, in welcher er die Membran 102 gegen eine Öffnung 108 drückt, welche den Ausgang 50 bildet oder in direkter fluidwirksamer Verbindung mit dem Ausgang 50 steht. In dieser ersten Stellung ist die Öffnung 108 gesperrt. Es ist dann auch ein Fluidweg zwischen dem Ausgang 50 und dem Ausgang 94 gesperrt und an dem Ausgang 94 steht kein fluides Medium an.

In einer zweiten ausgezeichneten Stellung des Kolbens 104, welche in Figur 1 gezeigt ist, ist die Membran 102 so positioniert, dass dieser Fluidweg freigegeben ist und fluides Medium von dem Ausgang 50 zu dem Ausgang 94 strömen kann und dort bereitgestellt ist.

Es ist dabei möglich, dass der Kolben 104 nicht fest mit der Membran 102 verbunden ist und, wenn der Kolben 104 nicht auf die Membran 102 wirkt, diese aufgrund einer Rückstellkraft beispielsweise durch Eigenelastizität den genannten Fluidweg freigibt.

Es ist auch möglich, dass der Kolben 104 fest mit der Membran 102 verbunden ist und aktiv zwischen der ersten Stellung und der zweiten Stellung bewegt wird und bei Positionierung in der zweiten Stellung die Membran 102 so aktiv positioniert, dass der genannte Fluidweg freigegeben ist.

Das Ventil 96 der Ventilvorrichtung 10 ist ein Dosierventil und Mischventil, welches auch eine Sperrfunktion aufweist. Über die Kolbeneinheit 90 ist schaltbar, ob an dem Ausgang 94 fluides Medium ansteht oder nicht. Das dort anstehende fluide Medium wiederum wird über das Ventil 96 dosiert und es ist einstellbar, in welcher Menge das dampfförmige Medium und das flüssige Medium in dem Entnahmemedium vorhanden sind.

Das Stellelement 20 ist drehfest mit einem Wahlschalter 110 einer Anwendung verbunden. Durch entsprechende Drehbetätigung des Wahlschalters 110 ausgehend von einer Grundstellung wird eine Drehbetätigung des Stellelements 20 bewirkt. Durch eine entsprechende Drehstellung des Wahlschalters 110 wird eine entsprechende Drehstellung des Stellelements 20 gegenüber seiner Grundstellung eingestellt und damit wird eine Dosierung beziehungsweise Mischung eingestellt. Dies wird untenstehend noch näher anhand eines Dampfreinigungsgeräts erläutert.

Die Ventilvorrichtung 10 funktioniert wie folgt:
Über den ersten Eingang 38 lässt sich beispielsweise flüssiges Medium in den Aufnahmeraum 18 einkoppeln. Über den zweiten Eingang 40 lässt sich beispielsweise dampfförmiges Medium einkoppeln. Eine Drehstellung des Stellelements 20 bestimmt dabei, in welcher Menge die jeweiligen fluiden Medien an dem Ausgang 50 bereitgestellt sind.

In einer Grundstellung des Stellelements 20, bei welchem das Stiftelement 60 in der Kulissenbahn 58 an einem ersten Anschlag anliegt, sperrt das Stellelement 20 die Öffnung 48 ab (Figuren 1 und 2). In dieser Grundstellung liegt der Stift 72 an der Anlagefläche 214 an und sperrt den ersten Eingang 38. An dem zweiten Eingang 40 anstehendes dampfförmiges Medium kann durch die Kanäle 86 hindurch in den Freibereich 84 gelangen, wird von dort jedoch nicht über die Öffnung 48 aufgrund der genannten Sperrung abgeführt.

An dem ersten Eingang 38 anstehendes flüssiges Medium wird von dem Eintritt in den Aufnahmeraum 18 durch den sperrenden Stift 72 gesperrt. Durch Drehung des Stellelements 20 ausgehend von dieser Grundstellung wird die Öffnung 48 freigegeben, so dass dann dampfförmiges Medium an dem Ausgang 50 ansteht. Der Drehwinkel ausgehend von der Grundstellung bestimmt dabei, welche Menge an dampfförmigem Medium an dem Ausgang 50 ansteht. Der Verlauf in Abhängigkeit von dem Drehwinkel ist dabei durch die Gestaltung des Freibereichs 84 angepasst an die Öffnung 58 bestimmt. Beispielsweise ist die an dem Ausgang 50 anstehende Menge linear abhängig von der Drehstellung des Stellelements 20 ausgehend von der Grundstellung.

Wenn die Drehung soweit erfolgt ist, dass das Stiftelement 60 in den zweiten Bahnanteil 66 eintaucht, dann hebt der Stift 72 von der Anlagefläche 214 (Figur 3) ab. Dadurch kann an dem ersten Eingang 38 anstehendes flüssiges Medium in den Mischungsraum 70 gelangen und von dort durch die Kanäle 86 in den Freibereich 84 und damit zu der Öffnung 48 gelangen und steht an dem Ausgang 50 an. Es erfolgt eine Mischung von dampfförmigem Medium und flüssigem Medium. Es wird dadurch eine Zumischung von flüssigem Medium zu dem dampfförmigen Medium erreicht.

Die Drehung des Stellelements 20 erfolgt dabei soweit, bis das Stiftelement 60 an einem zweiten Anschlag, welcher an dem zweiten Bahnanteil 66 gebildet ist, anschlägt. Es ist dann die maximale Abhebeposition des Stellelements 20 erreicht.

Durch die Drehstellung des Stellelements 20 ist dann einstellbar, ob an dem Ausgang 50 überhaupt Medium bereitgestellt ist. Es ist dann bis zum Erreichen des zweiten Bahnanteils 66 die Dosierung des dampfförmigen Mediums einstellbar und bei einer Weiterdrehung in bestimmten Drehstellungen ist einstellbar, ob dem an dem Ausgang 50 anstehenden fluiden Medium flüssiges Medium zugemischt ist.

Die Kolbeneinheit 90 steuert, ob das an dem Ausgang 50 anstehende fluide Medium einer Anwendung zur Verfügung gestellt wird. Die Kolbeneinheit 90 ist dabei "medientrennend" ausgebildet. Der Kolben 104 kommt nicht in Berührung mit dem fluiden Medium, so dass auch Verkalkungsprobleme usw. minimiert sind.

Der Ventilkörper 12 und das Stellelement 20 sind insbesondere aus einem Kunststoffmaterial hergestellt. Durch die Kanäle 86 im Stellelement 20 müssen keine Kanäle in dem Ventilkörper 12 angeordnet werden. Das entsprechende Ventil 96 lässt sich auf effektive Weise herstellen; es lässt sich gewichtssparend realisieren. Durch eine Herstellung aus Kunststoff lassen sich die Strömungseigenschaften am Ventil 96 optimieren.

Es lässt sich auf einfache Weise ein Drehbereich von beispielsweise 180° realisieren. Es lässt sich dadurch wiederum eine einfache Bedienbarkeit des Wahlschalters 110 realisieren. Dadurch lässt sich beispielsweise der Platzbedarf an einem Gehäuse minimieren.

Beispielsweise lassen sich durch die Verwendung von Kunststoffmaterialien auch relativ große Durchmesser für das Stellelement 20 und den Aufnahmeraum 18 erreichen. Dadurch ergibt sich eine effektive Drehlagerung.

Darüber hinaus ergibt sich eine einfache Wartung und eine einfache Austauschbarkeit.

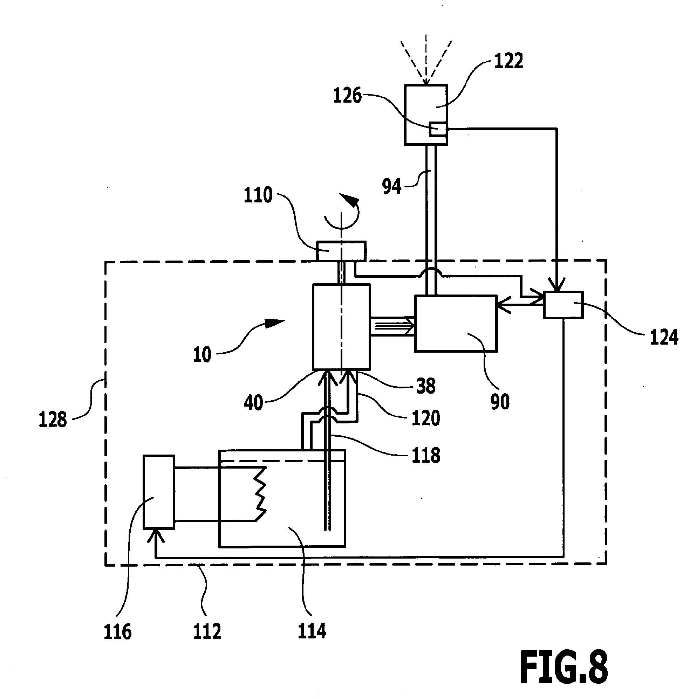

Eine erfindungsgemäße Ventilvorrichtung wird beispielsweise in einem Dampfreinigungsgerät 112 eingesetzt, welches in Figur 8 schematisch gezeigt ist.

Das Dampfreinigungsgerät 112 weist beispielsweise einen Behälter 114 auf, welcher Flüssigkeit (insbesondere Wasser) für die Dampferzeugung über eine Heizeinrichtung 116 aufnimmt. Eine Steigleitung 118 führt von einem Flüssigkeitsbereich des Behälters 114 zu dem zweiten Eingang 40 der Ventilvorrichtung 10. Eine Leitung 120 für dampfförmiges Medium führt zu dem ersten Eingang 38.

An den Ausgang 94 ist eine Anwendung 122 wie beispielsweise eine Sprühpistole anschließbar.

Das Dampfreinigungsgerät 112 weist eine Steuerungseinrichtung 124 auf. Die Anwendung 122 umfasst ein Steuerelement 126 wie beispielsweise einen Schalter, durch welchen schaltbar ist, ob die Anwendung 122 fluides Medium bereitstellt und beispielsweise versprüht. Dieses Steuerelement 126 liefert entsprechende Steuersignale an die Steuerungseinrichtung 124, welche wiederum entsprechende Steuerungssignale der Kolbeneinheit 90 bereitstellt und eine Bewegung des Kolbens 104 auslöst beziehungsweise die Position des Kolbens 104 steuert. Wenn beispielsweise eine Betätigung der Anwendung 122 über das Steuerelement 126 erfolgt, dann wird der Kolben 104 in seine zweite Stellung bewegt, um den Fluidweg zwischen dem Ausgang 50 und dem Ausgang 94 freizugeben.

Die Steuerungseinrichtung 124 steuert vorzugsweise auch die Heizeinrichtung 116 zur Dampferzeugung.

Der Wahlschalter 110 ist von einer Außenseite eines Gehäuses 128 des Dampfreinigungsgeräts 112 bedienbar. Durch den Wahlschalter 110 wird, wie oben erwähnt, eine Drehbetätigung des Stellelements 20 bewirkt und dabei eine bestimmte Drehstellung festgelegt.

Insbesondere weist der Wahlschalter 110, wie beispielhaft in Figur 7 gezeigt, unterschiedliche Stellungen zur Dosierung der Dampfmenge bereit, welche an dem Ausgang 50 ansteht. In diesen Stellungen 1 2 3 4 gemäß Figur 6 enthält das an dem Ausgang 50 anstehende fluide Medium nur dampfförmiges Medium ohne Zumischung von flüssigem Medium.

In einer weiteren Stellung, welche durch das Tropfensymbol in Figur 7 angedeutet ist, ist der Wahlschalter 110 dann in einer solchen Position, dass das Stellelement 20 abgehoben ist und an dem ersten Eingang 38 anstehendes flüssiges Medium in den Mischungsraum 70 gelangen kann.

In einer Ausstellung des Wahlschalters 110, welche in Figur 7 durch das "OFF"-Symbol angedeutet ist, befindet sich das Stellelement 20 in seiner Grundstellung und die Fluidabgabe ist gesperrt, das heißt an dem Ausgang 50 steht kein fluides Medium an.

### Bezugszeichenliste

- 10: Ventilvorrichtung
- 12: Ventilkörper
- 14: Zylinderelement
- 16: Flansch
- 18: Aufnahmeraum
- 20: Stellelement
- 22: Axiale Richtung
- 24: Erstes Ende
- 26: Zweites Ende
- 28: Öffnung
- 30: Rotationssymmetrieachse
- 32: Ringstutzen
- 34: Ringraum
- 36: Öffnung
- 38: Erster Eingang (für flüssiges Medium)
- 40: Zweiter Eingang (für dampfförmiges Medium)
- 44: Rohrelement
- 46: Innenraum
- 48: Öffnung
- 50: Ausgang
- 52: Außenkontur
- 54: Drehachse
- 56: Kulissenbahnführung
- 58: Kulissenbahn
- 60: Stiftelement
- 62: Aufnahmeelement
- 64: Erster Bahnanteil
- 66: Zweiter Bahnanteil
- 68: Kegelkopf
- 70: Mischungsraum
- 72: Stift
- 74: Ringbereich
- 76: Erster Bereich
- 78: Zweiter Bereich
- 80: Nut
- 82: Nut
- 84: Freibereich
- 86: Kanal
- 88: Ringfläche
- 90: Kolbenelement
- 92: Raum
- 94: Ausgang
- 96: Ventil
- 98: Erster Bereich
- 100: Zweiter Bereich
- 102: Membran
- 104: Kolben
- 106: Richtung
- 108: Öffnung
- 110: Wahlschalter
- 112: Dampfreinigungsgerät
- 114: Behälter
- 116: Heizeinrichtung
- 118: Steigleitung
- 120: Leitung
- 122: Anwendung
- 124: Steuerungseinrichtung
- 126: Steuerelement
- 128: Gehäuse
- 200: Gegenelement
- 202: Ausnehmung
- 204: Innenring
- 206: Außenring
- 208: Verbindungssteg
- 210: Ausnehmung
- 212: Stutzen
- 214: Anlagefläche

## Patentansprüche

1. Ventilvorrichtung, umfassend
- einen Ventilkörper (12),
- mindestens einen ersten Eingang (38) für ein flüssiges Medium und einen zweiten Eingang (40) für ein dampfförmiges Medium, welche an dem Ventilkörper (12) angeordnet sind,
- mindestens einen Ausgang (50), welcher an dem Ventilkörper (12) angeordnet ist, und
- ein Stellelement (20), welches eine Spindel ist, die drehbar an dem Ventilkörper (12) gelagert ist, und in einem Aufnahmeraum (18) höhenverschieblich gelagert ist,
wobei der Ventilkörper (12) zur Bildung des ersten Eingangs (38) eine Öffnung (28) und zur Bildung des zweiten Eingangs (40) eine Öffnung (36) aufweist, mindestens ein Kanal (86) in die Öffnung (28) zur Bildung des ersten Eingangs (38) mündet und das Stellelement (20) einen Stift (72) aufweist, wobei eine Höhenposition des Stifts (72) bestimmt, ob der erste Eingang (38) gesperrt oder offen ist, und eine Stellung des Stellelements (20) bestimmt, welche Menge an dem oder den fluiden Medien, welche an dem ersten Eingang (38) oder zweiten Eingang (40) einkoppelbar sind, an dem mindestens einen Ausgang (50) auskoppelbar sind,
dadurch gehennzechnet, dass Stellelement (20) einen ersten Bereich (76) aufweist, welcher in fluidwirksamer Verbindung mit dem ersten Eingang (38) und dem zweiten Eingang (40) steht, und einen zweiten Bereich (78) aufweist, welcher fluidwirksam mit dem mindestens einen Ausgang (50) verbindbar oder verbunden ist,
wobei zwischen dem ersten Bereich (76) und dem zweiten Bereich (78) der mindestens eine Kanal (86) in dem Stellelement (20) angeordnet ist, so dass fluides Medium von dem ersten Bereich (76) in den zweiten Bereich (78) durch das Stellelement (20) hindurchströmen kann, und
wobei der Ventilkörper (12) eine Öffnung (48) aufweist, welche in direkter fluidwirksamer Verbindung mit dem mindestens einen Ausgang (50) steht und wobei das Stellelement (20) in dem zweiten Bereich (78) so ausgebildet ist, dass ein Bedeckungsgrad dieser Öffnung (48) durch das Stellelement (20) abhängig von der Stellung des Stellelements (20) ist und/oder eine Stellung des Stellelements (20) bestimmt, welche Menge an fluidem Medium in die Öffnung (48) einkoppelbar ist.

2. Ventilvorrichtung nach Anspruch 1, **dadurch gekennzeichnet, dass** die Spindel eine zylindrische Außenkontur (52) aufweist und der Ventilkörper (12) den dazu angepassten hohlzylindrischen Aufnahmeraum (18) aufweist.

3. Ventilvorrichtung nach Anspruch 2, **dadurch gekennzeichnet, dass** für das Stellelement (20) eine Kulissenbahnführung (56) vorgesehen ist, wobei insbesondere eine Kulissenbahn (58) einen ersten Bahnanteil (64) mit bezogen auf eine Drehachse (54) des Stellelements (20) gleicher axialer Höhe und einen Bahnanteil (66) mit axialer Höhenänderung aufweist, und insbesondere, dass an dem Ventilkörper (12) ein Stiftelement (60) der Kulissenbahnführung (56) gehalten ist, wobei die Kulissenbahn (58) an dem Stellelement (20) gebildet ist.

4. Ventilvorrichtung nach Anspruch 2 oder 3, **dadurch gekennzeichnet, dass** das Stellelement (20) drehfest mit einem Wahlschalter (110) verbunden ist und durch diesen in seiner Stellung festlegbar ist und eine Stellungsänderung betätigbar ist.

5. Ventilvorrichtung nach einem der Ansprüche 2 bis 4, **gekennzeichnet durch** eine Drehbarkeit des Stellelements (20) von mindestens näherungsweise 180°.

6. Ventilvorrichtung nach einem der vorangehenden Ansprüche, **dadurch gekennzeichnet, dass** das Stellelement (20) aus einem Kunststoffmaterial hergestellt ist und insbesondere einstückig ist.

7. Ventilvorrichtung nach einem der vorangehenden Ansprüche, **dadurch gekennzeichnet, dass** der Ventilkörper (12) aus einem Kunststoffmaterial hergestellt ist und insbesondere einstückig ist.

8. Ventilvorrichtung nach einem der vorangehenden Ansprüche, **dadurch gekennzeichnet, dass** das Stellelement (20) an dem ersten Bereich (76) einen Kopf (78) aufweist, in welchen der mindestens einen Kanal (86) mündet.

9. Ventilvorrichtung nach einem der vorangehenden Ansprüche, **dadurch gekennzeichnet, dass** an dem Ventilkörper (12) ein Ringbereich (34) angeordnet ist, an welchem der zweite Eingang (40) positioniert ist, wobei insbesondere der Ringbereich (34) den ersten Eingang (38) umgibt, und insbesondere, dass in einem Aufnahmeraum (18) des Ventilkörpers (12) ein Mischungsraum (70) für dampfförmiges Medium und flüssiges Medium gebildet ist oder bildbar ist.

10. Ventilvorrichtung nach einem der vorangehenden Ansprüche, **dadurch gekennzeichnet, dass** in dem Stellelement (20) eine Mehrzahl von Kanälen (86) gebildet sind, welche in einer Umfangsrichtung beabstandet sind, wobei die Kanäle (86) insbesondere gleichmäßig beabstandet sind.

11. Ventilvorrichtung nach einem der vorangehenden Ansprüche, **dadurch gekennzeichnet, dass** eine Summe der hydrodynamischen Querschnitte des oder der Kanäle (86) im Bereich zwischen 2 mm und 3 mm und insbesondere im Bereich zwischen 2,2 mm und 2,8 mm und insbesondere im Bereich zwischen 2,4 mm und 2,6 mm liegen.

12. Ventilvorrichtung nach einem der vorangehenden Ansprüche, **gekennzeichnet durch** eine Kolbeneinheit (90), welche einen beweglichen Kolben (104) aufweist, welcher dem mindestens einen Ausgang (50) zugeordnet ist, und insbesondere, dass der mindestens eine Ausgang (50) des Ventilkörpers (12) in einen Raum (92) mündet, welcher einen ersten Bereich (98) und einen zweiten Bereich (100) aufweist, wobei der erste Bereich (98) mindestens einen Ausgang (94) der Kolbeneinheit (90) aufweist, der Kolben (104) in dem zweiten Bereich (100) angeordnet ist und der erste Bereich (98) und der zweite Bereich (100) von einer Membran (102) getrennt sind, und insbesondere, dass in einer ersten Stellung der Membran (102) ein Fluidweg zwischen dem mindestens einen Ausgang (50) des Ventilkörpers (12) und dem mindestens einen Ausgang (94) der Kolbeneinheit (90) gesperrt ist und in einer zweiten Stellung der Membran (102) dieser Fluidweg freigegeben ist, und insbesondere, dass der Kolben (104) auf die Membran (102) wirkt und/oder mit dieser verbunden ist und die Membran (102) über eine Stellung des Kolbens (104) in die erste Stellung oder zweite Stellung bringbar ist, und insbesondere, dass die Kolbeneinheit (90) steuerbar ist und insbesondere magnetisch steuerbar.

13. Ventilvorrichtung nach einem der vorangehenden Ansprüche, **gekennzeichnet durch** eine Ausbildung als Dosierventil und/oder Mischventil.

14. Dampfreinigungsgerät, umfassend eine Ventilvorrichtung (10) gemäß einem der vorangehenden Ansprüche.

## Claims

1. Valve apparatus, comprising
- a valve body (12),
- at least one first entry (38) for a liquid medium and a second entry (40) for a vaporous medium, which entries are arranged on the valve body (12),
- at least one exit (50) which is arranged on the valve body (12), and
- a control element (20) which is a spindle which is rotatably mounted on the valve body (12) and is mounted in a receiving space (18) so as to be height-adjustable,
wherein the valve body (12) has an opening (28) for forming the first entry (38) and an opening (36) for forming the second entry (40), at least one channel (86) opens into the opening (28) for forming the first entry (38), and the control element (20) has a pin (72), wherein a height position of the pin (72) determines whether the first entry (38) is blocked or open, and a position of the control element (20) determines what amount of the fluid medium or media, which are able to be coupled in at the first entry (38) or second entry (40), are able to be decoupled at the at least one exit (50),
**characterized in that** the control element (20) has a first region (76) which is in fluidic connection with the first entry (38) and the second entry (40), and a second region (78) which is fluidically connectable or connected to the at least one exit (50),
wherein the at least one channel (86) is arranged in the control element (20) between the first region (76) and the second region (78), such that fluid medium is able to flow from the first region (76) into the second region (78) through the control element (20), and
wherein the valve body (12) has an opening (48) which is in direct fluidic connection with the at least one exit (50), and wherein the control element (20) is configured in the second region (78) such that a level of coverage of said opening (48) by the control element (20) is dependent on the position of the control element (20) and/or a position of the control element (20) determines what amount of fluid medium is able to be coupled into the opening (48).

2. Valve apparatus in accordance with Claim 1, **characterized in that** the spindle has a cylindrical outer contour (52) and the valve body (12) has the hollow-cylindrical receiving space (18) adapted thereto.

3. Valve apparatus in accordance with Claim 2, **characterized in that** a slot track guide (56) is provided for the control element (20), wherein in particular a slot track (58) has a first track portion (64) with equal axial height in relation to a rotational axis (54) of the control element (20) and a track portion (66) with axial height change, and in particular **in that** a pin element (60) of the slot track guide (56) is held on the valve body (12), wherein the slot track (58) is formed on the control element (20).

4. Valve apparatus in accordance with Claim 2 or 3, **characterized in that** the control element (20) is non-rotatably connected to a selector switch (110) and is fixable in its position by the same and a position change is actuateable.

5. Valve apparatus in accordance with any one of Claims 2 to 4, **characterized by** a rotatability of the control element (20) of at least approximately 180°.

6. Valve apparatus in accordance with any one of the preceding Claims, **characterized in that** the control element (20) is made of a plastic material and in particular is one piece.

7. Valve apparatus in accordance with any one of the preceding Claims, **characterized in that** the valve body (12) is made of a plastic material and in particular is one piece.

8. Valve apparatus in accordance with any one of the preceding Claims, **characterized in that** the control element (20) has at the first region (76) a head (78) into which the at least one channel (86) opens.

9. Valve apparatus in accordance with any one of the preceding Claims, **characterized in that** on the valve body (12) is arranged an annular region (34) at which the second entry (40) is positioned, wherein in particular the annular region (34) surrounds the first entry (38), and in particular **in that** a mixing space (70) for vaporous medium and liquid medium is formed or is formable in a receiving space (18) of the valve body (12).

10. Valve apparatus in accordance with any one of the preceding Claims, **characterized in that** in the control element (20) is formed a plurality of channels (86) which are spaced apart in a circumferential direction, wherein the channels (86) are spaced apart in particular uniformly.

11. Valve apparatus in accordance with any one of the preceding Claims, **characterized in that** a sum of the hydrodynamic cross sections of the channel (86) or channels (86) are in the range between 2 mm and 3 mm and in particular in the range between 2.2 mm and 2.8 mm and in particular in the range between 2.4 mm and 2.6 mm.

12. Valve apparatus in accordance with any one of the preceding Claims, **characterized by** a piston unit (90) which has a moveable piston (104) which is associated with the at least one exit (50), and in particular in that the at least one exit (50) of the valve body (12) opens into a space (92) which has a first region (98) and a second region (100), wherein the first region (98) has at least one exit (94) of the piston unit (90), the piston (104) is arranged in the second region (100), and the first region (98) and the second region (100) are separated by a membrane (102), and in particular in that in a first position of the membrane (102), a fluid path between the at least one exit (50) of the valve body (12) and the at least one exit (94) of the piston unit (90) is blocked and in a second position of the membrane (102), said fluid path is unblocked, and in particular in that the piston (104) acts on the membrane (102) and/or is connected thereto and the membrane (102) is able to be brought into the first position or second position by way of a position of the piston (104), and in particular in that the piston unit (90) is controllable and in particular magnetically controllable.

13. Valve apparatus in accordance with any one of the preceding Claims, **characterized by** a configuration as a metering valve and/or mixing valve.

14. Steam cleaning appliance, comprising a valve apparatus (10) in accordance with any one of the preceding Claims.

## Revendications

1. Dispositif de soupape, comportant
- un corps de soupape (12),
- au moins une première entrée (38) pour un milieu liquide et une deuxième entrée (40) pour un milieu sous forme de vapeur, lesquelles sont agencées sur le corps de soupape (12),
- au moins une sortie (50), laquelle est agencée sur le corps de soupape (12), et
- un élément de commande (20), lequel est une broche qui est montée en rotation sur le corps de soupape (12), et est monté dans un espace de logement (18) de manière à pouvoir coulisser en hauteur,
dans lequel le corps de soupape (12) présente une ouverture (28) pour la formation de la première entrée (38) et une ouverture (36) pour la formation de la deuxième entrée (40), au moins un canal (86) débouche dans l'ouverture (28) pour la formation de la première entrée (38) et l'élément de commande (20) présente une tige (72), dans lequel une position en hauteur de la tige (72) définit si la première entrée (38) est bloquée ou ouverte, et une position de l'élément de commande (20) définit quelle quantité de milieu ou de milieux fluides, lesquels peuvent être injectés sur la première entrée (38) ou la deuxième entrée (40), peut être extraite sur la au moins une sortie (50),
**caractérisé en ce que**
l'élément de commande (20) présente une première zone (76), laquelle est en liaison fluidique avec la première entrée (38) et la deuxième entrée (40), et une deuxième zone (78), laquelle peut être ou est en liaison fluidique avec la au moins une entrée (50),
dans lequel le au moins un canal (86) est agencé entre la première zone (76) et la deuxième zone (78) dans l'élément de commande (20), de sorte qu'un milieu fluide peut traverser l'élément de commande (20) depuis la première zone (76) vers la deuxième zone (78), et
dans lequel le corps de soupape (12) présente une ouverture (48), laquelle est en liaison fluidique directe avec la au moins une sortie (50) et dans lequel l'élément de commande (20) est conçu dans la deuxième zone (78) de sorte qu'un degré de recouvrement de cette ouverture (48) par l'élément de commande (20) dépend de la position de l'élément de commande (20) et/ou qu'une position de l'élément de commande (20) définit quelle quantité de milieu fluide peut être injectée dans l'ouverture (48).

2. Dispositif de soupape selon la revendication 1, **caractérisé en ce que** la broche présente un contour extérieur cylindrique (52) et le corps de soupape (12) présente l'espace de logement (18) cylindrique creux adapté à celui-ci.

3. Dispositif de soupape selon la revendication 2, **caractérisé en ce qu'**un guidage de voie de coulisse (56) est prévu pour l'élément de commande (20), dans lequel en particulier une voie de coulisse (58) présente une première partie (64) d'une hauteur axiale identique par rapport à un axe de rotation (54) de l'élément de commande (20) et une partie de voie (66) présentant une variation de hauteur axiale, et en particulier **en ce qu'**un élément tige (60) du guidage de voie de coulisse (56) est retenu sur le corps de soupape (12), dans lequel la voie de coulisse (58) est formée sur l'élément de commande (20).

4. Dispositif de soupape selon la revendication 2 ou 3, **caractérisé en ce que** l'élément de commande (20) est relié de manière solidaire en rotation à un commutateur-sélecteur (110) par l'intermédiaire duquel il peut être bloqué dans sa position et une modification de position peut être actionnée.

5. Dispositif de soupape selon l'une des revendications 2 à 4, **caractérisé par** une possibilité de rotation de l'élément de commande (20) d'au moins approximativement 180°.

6. Dispositif de soupape selon l'une quelconque des revendications précédentes, **caractérisé en ce que** l'élément de commande (20) est fabriqué à partir d'une matière plastique et est en particulier d'une seule pièce.

7. Dispositif de soupape selon l'une quelconque des revendications précédentes, **caractérisé en ce que** le corps de soupape (12) est fabriqué à partir d'une matière plastique et est en particulier d'une seule pièce.

8. Dispositif de soupape selon l'une quelconque des revendications précédentes, **caractérisé en ce que** l'élément de commande (20) présente sur la première zone (76) une tête (78) dans laquelle le au moins un canal (86) débouche.

9. Dispositif de soupape selon l'une quelconque des revendications précédentes, **caractérisé en ce qu'**une zone annulaire (34), sur laquelle est positionnée la deuxième entrée (40), est située sur le corps de soupape (12), dans lequel en particulier la zone annulaire (34) entoure la première entrée (38), et en particulier **en ce qu'**un espace de mélange (70) pour le milieu sous forme de vapeur et le milieu liquide est ou peut être formé dans un espace de logement (18) du corps de soupape (12).

10. Dispositif de soupape selon l'une quelconque des revendications précédentes, **caractérisé en ce qu'**une pluralité de canaux (86) sont formés dans l'élément de commande (20), lesquels sont espacés dans une direction périphérique, dans lequel les canaux (86) sont en particulier espacés régulièrement.

11. Dispositif de soupape selon l'une quelconque des revendications précédentes, **caractérisé en ce qu'**une somme des sections transversales hydrodynamiques du ou des canaux (86) se situe dans la plage comprise entre 2 mm et 3 mm et en particulier dans la plage comprise entre 2,2 mm et 2,8 mm et en particulier dans la plage comprise entre 2,4 mm et 2,6 mm.

12. Dispositif de soupape selon l'une quelconque des revendications précédentes, **caractérisé par** une unité à piston (90), laquelle présente un piston (104) mobile, lequel est associé à la au moins une sortie (50), et en particulier en ce que la au moins une sortie (50) du corps de soupape (12) débouche dans un espace (92), lequel présente une première zone (98) et une deuxième zone (100), dans lequel la première zone (98) présente au moins une sortie (94) de l'unité à piston (90), le piston (104) est agencé dans la deuxième zone (100) et la première zone (98) et la deuxième zone (100) sont séparées par une membrane (102), et en particulier en ce que, dans une première position de la membrane (102), une voie de fluide entre la au moins une sortie (50) du corps de soupape (12) et la au moins une sortie (94) de l'unité à piston (90) est bloquée, et dans une deuxième position de la membrane (102), cette voie de fluide est libérée, et en particulier en ce que le piston (104) agit sur la membrane (102) et/ou est relié à celle-ci et la membrane (102) peut être amenée par l'intermédiaire d'une position du piston (104) dans la première position ou la deuxième position, et en particulier en ce que l'unité à piston (90) peut être commandée et en particulier peut être commandée magnétiquement.

13. Dispositif de soupape selon l'une quelconque des revendications précédentes, **caractérisé en ce qu'**il est réalisé sous la forme d'une soupape de dosage et/ou d'une vanne mélangeuse.

14. Appareil de nettoyage à la vapeur, comportant un dispositif de soupape (10) selon l'une quelconque des revendications précédentes.
